# EUROPEAN PATENT SPECIFICATION

(11) **EP 1 467 355 B1**
(45) Date of publication and mention of the grant of the patent: **16.07.2008**
(21) Application number: 04252081.7
(22) Date of filing: 07.04.2004
(51) Int. Cl.: G11B 7/0065

(54) **Information recording apparatus, information recording methods and information recording medium.**
Informationsaufzeichnungsgeräte, Verfahren zur Informationsaufzeichnung und Informationsaufzeichnungmedium
Appareil d'enregistrement optique, procédés d'enregistrement optique et support d'enregistrement optique

(30) Priority: 10.04.2003 JP 2003106278
(43) Date of publication of application: 13.10.2004
(73) Proprietor: Pioneer Corporation, Meguro-ku, Tokyo (JP)
(72) Inventor: Kuroda, Kazuo c/o Pioneer Corporation, Tokorozawa-shi Saitama (JP)
(74) Representative: Haley, Stephen

(56) References cited:
- WO-A-20/05029476
- US-A- 3 976 354
- US-A- 4 021 606
- US-A- 4 295 162
- US-A1- 2002 135 832
- PATENT ABSTRACTS OF JAPAN vol. 003, no. 061 (E-113), 26 May 1979 (1979-05-26) -& JP 54 040045 A (NIPPON TELEGR & TELEPH CORP <NTT>), 28 March 1979 (1979-03-28)
- PATENT ABSTRACTS OF JAPAN vol. 008, no. 211 (P-303), 26 September 1984 (1984-09-26) & JP 59 094252 A (CANON KK), 30 May 1984 (1984-05-30)

## Description

The present invention relates to a recording and reproducing method of information by utilizing a hologram.

There is known a method by utilizing a hologram, as a method for recording and reproducing information on an optical recording medium with high-density. In hologram recording, a reference light and a signal light modulated by a pattern corresponding to a recording signal are generated based on a laser light emitted from a laser light source, and the reference light and the signal light are irradiated on a recording medium. The recording medium is formed by sealing a hologram medium, and interference fringes formed by the reference light and the signal light are recorded on the recording medium. In reproducing the information, only the reference light is irradiated on the recording medium, and a diffracted light which is generated by the recorded interference fringes is received by a photodetector andthe like to obtain the recorded information. A recording and reproducing apparatus utilizing the hologram is disclosed in Japanese Patent Applications Laid-open under No. 2002-216359 and No. 6-333233.

As seen in the above-mentioned Japanese Patent Applications, the known hologram recording method records the information as a two-dimensional image on the recording medium in a relatively stationary state, by utilizing a two-dimensional spatial modulating unit. Therefore, when the recording lights (i.e., the signal light and the reference light) are irradiated, the recording medium has to be stationary relatively to a spatial modulating unit. If the side of a recording optical system such as a pickup is fixed, the recording medium is driven so that a recording position on the recording medium is stopped at an irradiating position of the recording light, and the recording is executed by irradiating the recording light. Then, the recording medium is again driven so that a next recordingposition on the recording medium is stopped at the irradiating position of the recording light to execute the recording. This operation is repeated. On the other hand, if the side of the recording medium is fixed, the recording is executed at the recording position of the recordingmediumby repeatedlymoving and stopping the recording optical system.

However, when driving and stopping of the recordingmedium have to be repeated during recording and reproducing, a so-called random access becomes uneasy. In a case of the recording medium such as a disc, since inertia of the disc is large, it is difficult to execute the driving and the stopping of the disc in a short time. In addition, since a rotation speed has to be small in order to frequently stop the disc, a speed at the time of the random access cannot be increased.

On the other hand, in the above-mentioned Japanese Patent Application Laid-open under No. 2002-216359, there is proposed a method, in which the recording light and the recording medium are made in a relatively stationary state by moving the pickup during the rotation of the disc. However, controlling both the recording optical system and the disc drive is complicated, which brings about a complicated and large-scale apparatus. Further, when moving the optical system such as the pickup, in addition to the control of the disc in the focus and the tracking directions, the movement control in a tangential direction of the disc is necessary, and the pickup has to be controlled in three-axes directions. Thereby, the axis of the pickup is inclined, and a deficiency, e.g. , the recording light cannot be appropriately irradiated on the disc, may happen.

The present invention has been achieved in order to solve the above problems. It is an object of this invention to provide a hologram recording method capable of improving random access performance.

First, a basic principle of a hologram recording and reproducing system according to the present invention will be explained. The hologram recording and reproducing system of the present invention is characterized in that one-dimensional spatial modulation is applied to a signal light, and the recording and reproducing is executed with a recording medium such as an optical disc being moved. In the known hologram recording which was described above, the signal light was modulated by utilizing the two-dimensional spatial modulating unit, and the recording was executed with the recording medium and the recording light being relatively stationary to each other. On the other hand, in the hologram recording and reproducing system of the present invention, the signal light is modulated by the one-dimensional spatial modulating unit. Though the recording medium such as the optical disc is moved, the irradiating position of the recording light, i.e., an optical system is fixed. Namely, the irradiating position of the recording light on the optical disc relatively moves on the disc. The one-dimensional spatial modulation is executed in a direction perpendicular or nearly perpendicular to a relative moving direction of the recording light on the recording medium. Thereby, the recording and reproducing with the recording medium such as the optical disc being moved is possible, and a random access performance is improved.

US3976354A, US4021606A, JP5404005A and US4295162A all disclose holographic information recording apparatus in which one-dimensional line image holograms are recorded on a moveable medium in a direction that is perpendicular or parallel to the direction of movement of the medium.

In a first aspect the invention consists in an information recording apparatus comprising:
a laser light source;
a dividing unit which divides a laser light emitted from the laser light source into two laser lights;
a one-dimensional spatial modulating unit which applies one-dimensional spatial modulation to one of the two divided laser lights based on recording information;
a recording optical system which irradiates the spatial-modulated laser light to a recording medium as a signal light and irradiates the other one of the two divided laser lights to the recording medium as a reference light, thereby to record the recording information on the recording medium; and
a moving unit which moves the recording medium with respect to the recording optical system such that an irradiation position of the signal light and the reference light relatively moves on the recording medium, wherein the recording optical system records the recording information while the moving unit is moving the recording medium,
characterised in that the one-dimensional spatial modulating unit comprises a grating configuration wherein the one-dimensional spatial modulating unit is positioned such that an alignment direction of irradiation images produced by the grating configuration has a predetermined angle with respect to a direction perpendicular to the moving direction of the recording medium by the moving unit.

The above-mentioned information recording apparatus generates the signal light and the reference light from one laser light, and irradiates the signal light and the reference light on the recording medium to record the information by utilizing the interference fringes. Namely, the information recording apparatus executes a so-called hologram recording. Though the signal light is generated by spatial-modulating the laser light by the recording information, the one-dimensional spatial modulation is performed in the present invention. By performing the one-dimensional spatial modulation, recording the information is possible even if the recording medium is moving in a direction perpendicular or nearly perpendicular to the direction of the spatial modulation. Thereby, even in a state that the irradiation position of the signal light and the reference light is moving relatively to the recording medium, e.g., while a disc-type recording medium is rotating, the hologram recording is possible. Thus, the random access performance to the recorded information can be improved and a configuration of the apparatus can be simplified.

When a disc is utilized as the recording medium, the one-dimensional spatial modulating unit may be positioned such that the alignment direction of the irradiation images produced by the grating configuration has a predetermined angle with respect to the radial direction of the disc. Thereby, when a damage such as a scratch is made in the radial direction of the disc, the reproduction of the recording information is ensured.

Moreover, the above-mentioned information recording apparatus may include a unit which controls a light quantity of the laser light from the laser light source based on the recording information. By controlling ON/OFF switching of the laser emission based on the recording information, it becomes possible to modulate the information to the moving direction of the recording medium and record the information. Therefore, in addition to modulating the recording information in a direction perpendicular to the moving direction of the recording medium by one-dimensional spatial modulation, modulating the recording information and recording the information in the moving direction of the recording medium can be performed, and the improvement of information recording density is possible.

Also, the reproducing unit may be provided to the recording apparatus, which irradiates only the reference light on the recording medium and reproduces the recording information based on the reflected light from the recording medium. By reproducing the above-mentioned recording information while the moving unit is moving the recording medium, the information recording and reproducing apparatus can be achieved.

The nature, utility, and further features of this invention will be more clearly apparent from the following detailed description with respect to preferred embodiment of the invention when read in conjunction with the accompanying drawings briefly described below.
FIG. 1 is a block diagram showing a configuration of hologram disc recording and reproducing apparatus according to a comparative example to the embodiment of the present invention.
FIG. 2 schematically shows a state in which a signal light is irradiated on a disc by the hologram disc recording and reproducing apparatus shown in FIG.1.
FIG. 3 schematically shows an example of Fourier image formed on a disc.
FIG. 4 shows a configuration example of a light-receiving element shown in FIG. 1.
FIGS. 5A and 5B show examples of hologram marks formed according to the modulation.
FIGS. 6A and 6B show examples for explaining a method of recording by shifting an axis direction of Fourier image from a disc radial direction.
FIG. 7 schematically shows a state in which a signal light is irradiated on a disc by a hologram disc recording and reproducing apparatus which utilizes a cylindrical lens.
FIG. 8 is a block diagram showing a configuration example of a recording and reproducing apparatus for a card-type recording medium.
FIG. 9 is a block diagram showing a configuration example of a recording and reproducing apparatus in a case of adopting a recording method without dividing a laser light.
FIG. 10 is a diagram showing a state of an optical beam near a recordingmedium of the recording and reproducing apparatus shown in FIG. 9.

Comparative examples and a preferred embodiment of the present invention will now be described below with reference to the attached drawings.

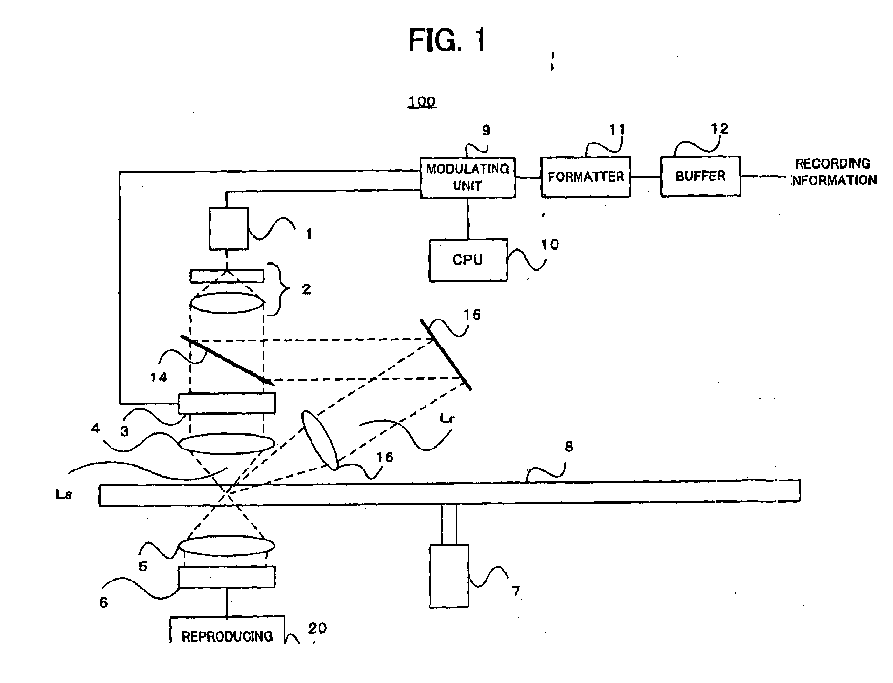

FIG. 1 shows a configuration of the hologram disc recording and reproducing apparatus (hereafter, it is also simply called "recording and reproducing apparatus") in a comparative example to the present invention. As shown in FIG. 1, a recording and reproducing apparatus 100 records information on a hologram disc (hereafter, it is simply called "disc") 8 and reproduces the information therefrom. For example, the disc 8 may be formed by injecting a hologram medium, such as a photopolymer, between two glass substrates, and the same disc as is utilized for the hologram recording in the above-mentioned known art can be utilized. The disc 8 is rotated by a spindle motor 7. It is noted that the rotation of the spindle motor 7 is controlled by a spindle servo method which is executed during the recording and reproducing of the ordinary optical disc.

The recording information which is inputted from outside is temporarily retained in a buffer 12 once, and is transmitted to a formatter 11. The formatter 11 executes, to the recording information, a necessary process such as an addition of ECC (Error Correction Code), and generates data corresponding to a predetermined recording format to supply the data to the modulating unit 9. The modulating unit 9 executes two kinds of modulations. One is the modulation of the signal light by the one-dimensional spatial modulating unit 3 which will be explained later, and the other is the modulation of a laser light emitted from a laser light source 1. The modulations will be explained later.

The optical system, which generates the recording lights (the signal light and the reference light) and irradiates the recording lights on the disc 8, includes the laser light source 1, an expander 2, a one-dimensional spatial modulating unit 3, a Fourier transforming lens 4, and an inverse Fourier transforming lens 5, a light-receiving element 6, a half mirror 14, a reflection mirror 15 and a condensing lens 16. The disc 8 is disposedbetween the Fourier transforming lens 4 and the inverse Fourier transforming lens 5.

A diameter of the laser light emitted from the laser light source 1 is increased by the expander 2, and the laser light is divided in two lights, i.e., the signal light and the reference light by the half mirror 14. The laser light passed the half mirror 14 is modulated according to the pattern obtained from the modulating unit 9 by passing the one-dimensional spatial modulating unit 3, and is incident on the Fourier transforming lens 4 to be irradiated, as a signal light Ls, on the disc 8 by passing the Fourier transforming lens 4.

The other laser light divided by the half mirror 14 is reflected by the reflection mirror 15, and is irradiated, as a reference light Lr, on a recording surface of the disc 8 via the condensing lens 16. On the recording surface of the disc 8, the signal light Ls and the reference light Lr are simultaneously irradiated to the identical position of the disc 8. Thereby, the signal light Ls and the reference light Lr interfere with each other on the disc 8, on which the interference fringes are generated, and the interference fringes are recorded in the hologram medium inside the disc 8 as Fourier image.

On the other hand, during reproducing the information, the signal light Ls is cut off in order not to be irradiated on the disc 8, and only the identical reference light Lr utilized during recording is irradiated on the disc 8. The irradiated reference light Lr is diffracted by the interference fringes recorded on the disc 8, and a diffracted light is generated. The diffracted light is irradiated on the light-receiving element 6 via the inverse Fourier transforming lens 5, and a reproducing signal is obtained. The reproducing signal is supplied to a reproducing system 20.

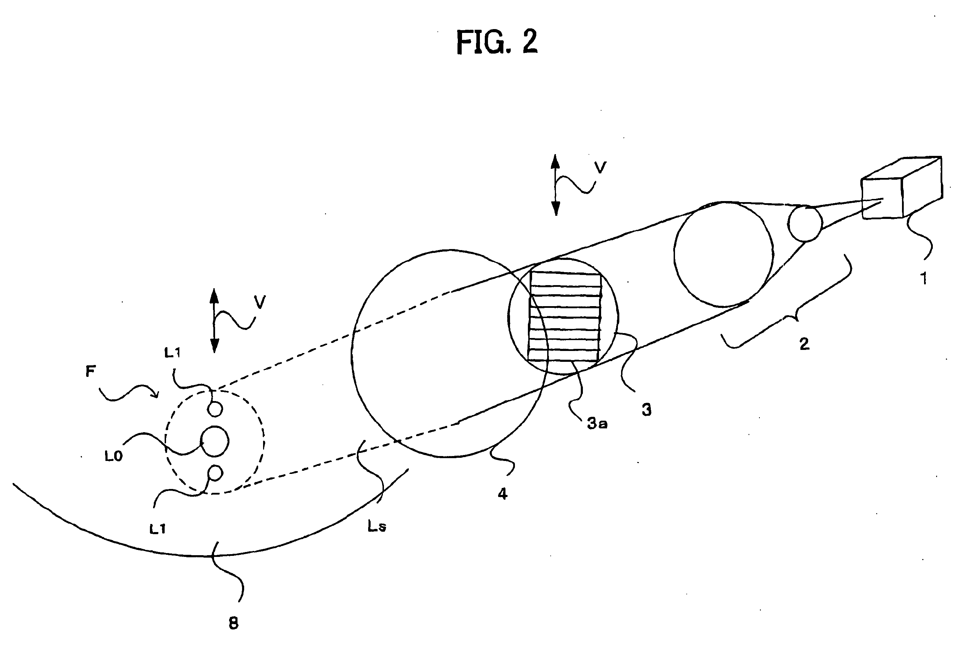

FIG. 2 schematically shows a state that the signal light Ls is irradiated on the disc by the recording and reproducing apparatus 100 shown in FIG .1. The laser light emitted from the laser light source 1 is enlarged by the expander 2, and is incident on the one-dimensional spatial modulating unit 3. The one-dimensional spatial modulating unit 3 has a grating configuration 3a, as shown in FIG. 2. In the example in FIG. 2, the grating configuration 3a which is continuous in the vertical direction (in the direction of an arrow V) is formed.

The laser light havingpassed the one-dimens ional spatial modulating unit 3 is irradiated on the recording surface of the disc 8 by the Fourier transforming lens 4. On the recording surface of the disc 8, as shown in FIG. 2, the Fourier image F having one 0th (zeroth)-order diffracted light L0 and two 1st-order diffracted lights L1 is formed. In the example of FIG. 2, since the grating configuration 3a of the one-dimensional spatial modulating unit 3 is formed in the V-direction in FIG. 2, those two 1st-order diffracted lights L1 are formed in line in the V-direction on both sides (the upper and lower sides) of the 0th-order diffracted light L0. It is noted that a distance between the 0th-order diffracted light L0 and the 1st-order diffracted light L1 on the disc 8 is determined by a distance between the gratings of the grating configuration 3a of the one-dimensional spatial modulating unit 3 and the wavelength of the light. The Fourier image F is recorded on the disc 8 as the interference fringes.

The Fourier image F is recorded on the recording medium, with the recording medium being moved relatively to the recording optical system. In the embodiment, since the recording medium is a disc, the Fourier image F which is formed on the recording surface of the disc 8 by the rotation of the disc 8 moves toward a tangent direction of the disc 8.

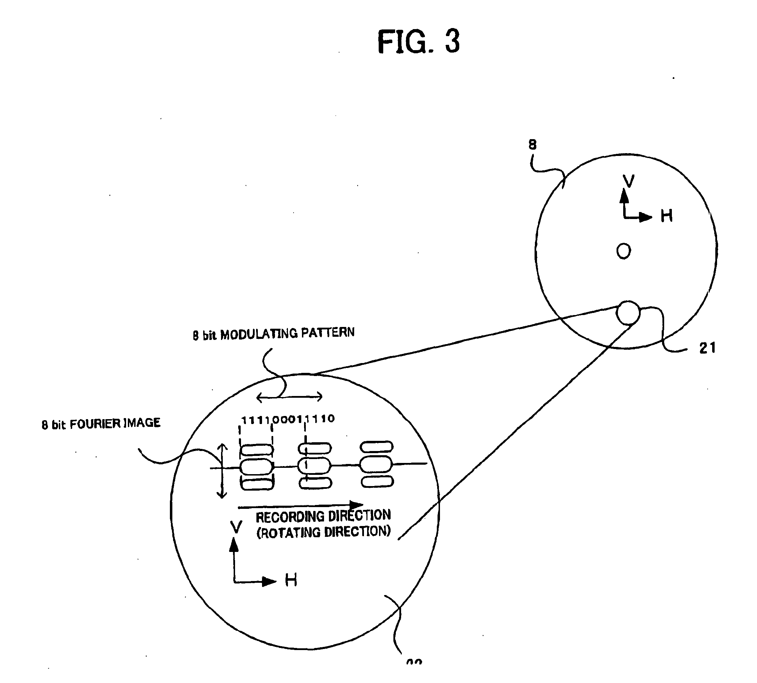

FIG. 3 schematically shows an example of the Fourier image F formed on the disc. It is noted that the example in FIG. 3 is an example in a case that the 8-bit one-dimensional spatial modulating unit 3 shown in FIG. 2 is utilized. On the disc 8, a portion 21 to which the recording light is irradiated is shown in a circle 22 as a magnified view.

In a state that disc 8 is stationary, the Fourier image F shown in FIG. 2 is recorded on the disc 8. However, since the disc moves relatively to the recording light, the Fourier image Fwhich is actually recorded has elongated shape which is stretched out in the recording direction (in the tangent direction of the disc), as shown in FIG. 3. Hereafter, the Fourier image F which is recorded on the disc 8 is also called "hologram mark".

The hologram mark shown in FIG. 3 is modulated in both of two directions, i.e. , in the vertical direction (V-direction) and the horizontal direction (H-direction) in FIG. 3. It is noted that the V-direction shown in FIG. 3 is a radial direction of the disc 8, which corresponds to the V-direction shown in FIG. 2, i.e., the direction in which the gratings of the one-dimensional spatial modulating unit 3 are formed. The H-direction shown in FIG. 3 is the tangent direction of the disc 8.

One of the modulations in two directions is the modulation by the grating configuration 3a of the one-dimensional spatial modulating unit 3. In the embodiment, as shown in FIG. 2, the 8-bit one-dimensional spatial modulating unit 3 is utilized, and the Fourier image F recorded on the disc 8, i.e. , the hologram mark, has 8-bit information in the V-direction.

Additionally, in the embodiment, the presence and the absence of the laser light irradiated (i.e., ON/OFF switching of the laser light source 1) is controlled in the recording direction, i.e., the H-direction in FIG. 3, and thereby the modulation is executed by a hologram mark length. It is noted that a light quantity may be control led between two certain values, instead of ON/OFF switching of the laser light. In FIG. 3, a recording information example by the modulation of the mark length is indicated by numerical values "1" and "0". In the example in FIG. 3, the hologram mark is formed during an ON period of the laser light source 1, and the period corresponds to the recording information "1". On the other hand, during an OFF period of the laser light source 1, no hologram mark is formed, and the period corresponds to the recording information "0".

In the example in FIG. 3, the 8-bit information is recorded in the V-direction by the one-dimensional spatial modulating unit 3, and the modulation by the mark length of the hologram mark is performed in the H-direction by the ON/OFF switching control of the laser light source, too. Like this, in the embodiment, since two kinds of the modulations, i.e., the modulations by the one-dimensional spatial modulating unit and by the ON/OFF switching of the laser light source, are combined, larger amount of information can be recorded.

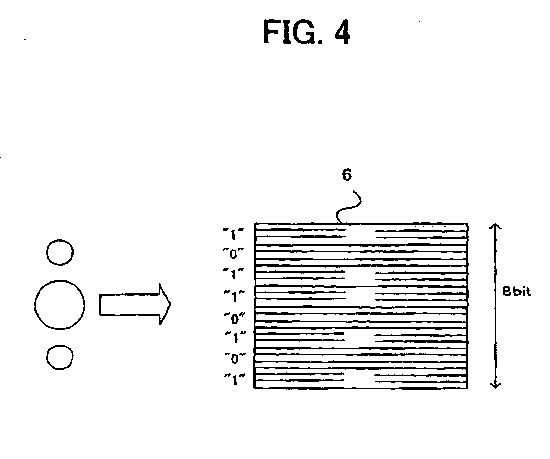

FIG. 4 shows a configuration example of the light-receiving element 6. In reproduction, only the reference light Lr is irradiated on the disc 8, and the diffracted light generated by the recorded Fourier image is inverse-Fourier-transformed by the inverse Fourier transforming lens 5 to be incident on the light-receiving element 6. The example shown in FIG. 4 is the 8-bit light-receiving element, and FIG. 4 indicates a state that the diffracted light corresponding to the 8-bit data "10110101" from the upper row is received.

### [Modification]

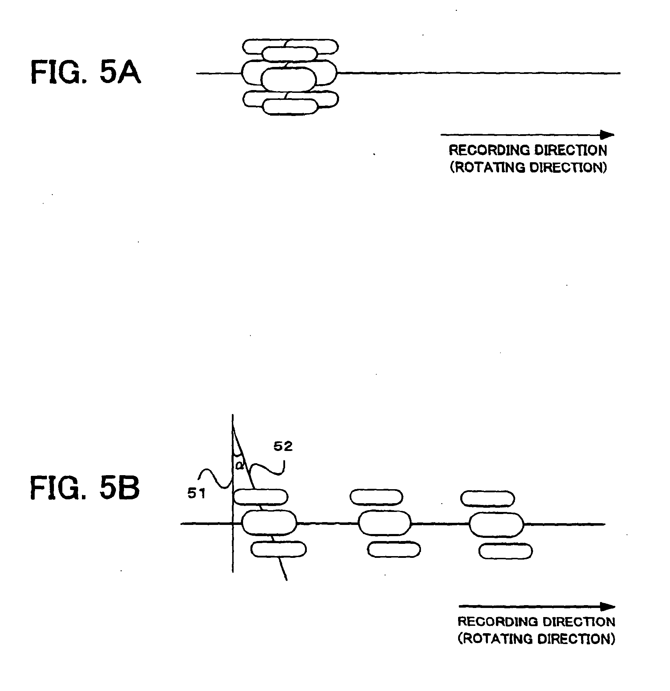

Since the hologram recording is performed in the present invention, different information can be recorded in amultiplexed manner (hereinafter referred to as "multi-recording") at the identical position on the recording medium by varying recording conditions. For example, FIG. 5A schematically shows an example of the hologram mark in a case that the recording is performed by shifting a center of the 0th-order light of the Fourier image in the V-direction or the H-direction. Further, by varying an irradiating angle of the signal light or the reference light, the different information canbe recorded in a multiplexed manner at the identical position on the recordingmedium, too. Moreover, if the property of the signal light is varied by the modulation of a spatial modulating unit, multi-recording can be performed, too. Generally, a multi-recordable quantity at the identical position on the hologram disc is indicated by M number, and the multi-recording of the information is possible within the range. For example, to the hologram disc whose M number is equal to 16, 16 different pieces of information can be recorded at the identical area.

In the above-mentioned embodiment, an axial direction of the Fourier image (i.e., a direction of a straight line formed by the 0th-order and 1st-order lights) is prescribed to have 90 degree to the rotating direction of the disc (i.e. , 0 degree to the V-direction which is the radial direction of the disc). However, in accordance with an embodiment of the present invention the recording can be performed with shifting the axial direction of the Fourier image from the radial direction of the disc, too. FIG. 5B shows an example thereof, in which the axial direction 52 of the Fourier image is shifted by an angle α with respect to the radial direction 51 of the disc.

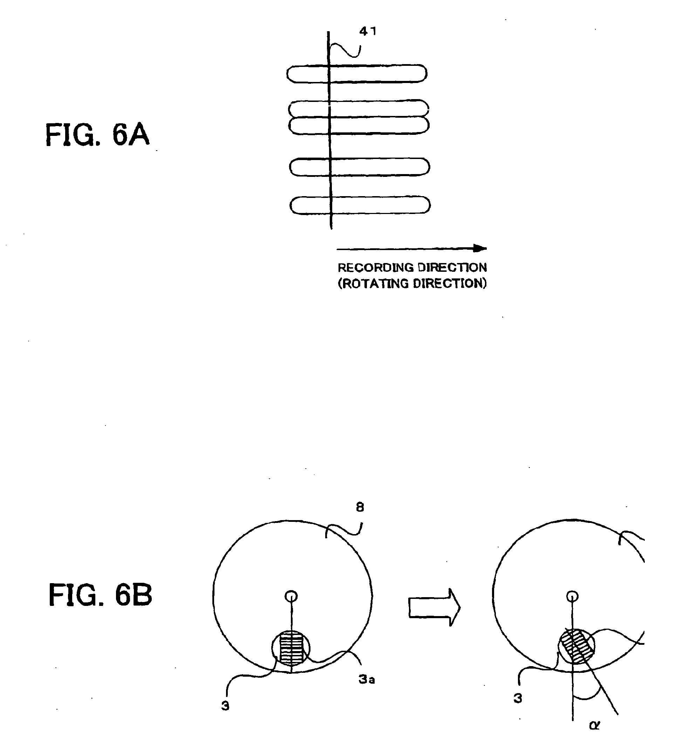

In a case of the disc-type recording medium, damage such as a scratch by a user handling a disc is made relatively often in the radial direction of the disc. FIG. 6A schematically shows a state thereof. Therefore, as shown in FIG. 6A, when a scratch 41 is made in the radial direction of the disc, no hologram mark in the identical radial direction is readable, and information in the portion cannot be reproduced at all. On the other hand, as shown in FIG. 5B, if the Fourier image is formed in the direction which is shifted with respect to the radial direction of the disc by a predetermined angle α, not all portions corresponding to an identical time base become unreadable, even though the scratch is made in the radial direction of the disc. Thus, there is high possibility that the data corresponding to the portion of the scratch can be restored by a method such as an error correction or the like. Therefore, by shifting the axial direction of the Fourier image, the recording which is hardly affected by the scratch in the radial direction of the disc is possible. In order to record information with rotating the axial direction of the Fourier image, as shown in FIG. 6B, the direction of the grating configuration 3a of the one-dimensional spatial modulating unit 3 may be rotated with respect to the radial direction of the disc by the angle α. It is noted that FIG. 6B is a top view schematically showing a relative positional relation between the disc and the one-dimensional spatial modulating unit 3.

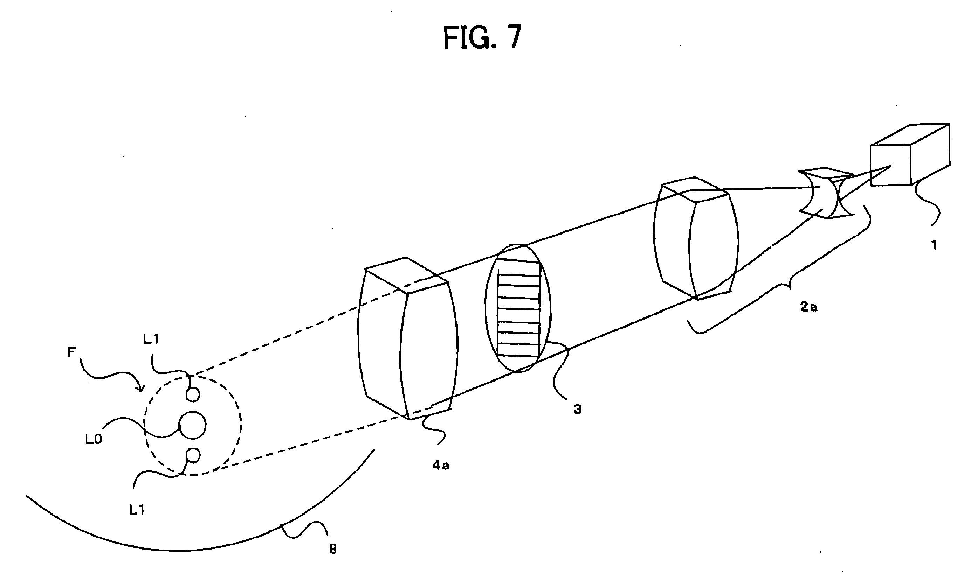

A cylindrical lens may be utilized for the expander 2 and the Fourier transforming lens 4 . FIG. 7 shows a configuration of the optical system in that case.

Though the example in which the one-dimensional spatial modulating unit is utilized is described in the above embodiment, a two-dimensional spatial modulating unit may also be utilized. However, in that case , it is a neces sary condition that reproducing data is not mixed in the moving direction of the recording medium during reproducing, even when the recording medium moves relatively to the recording light. For example, the two-dimensional spatial modulating unit, which has the identical values in the direction corresponding to the moving direction of the recording medium, may be applied.

The recording and reproducing apparatus shown in FIG. 1 is a so-called transmission-type recording and reproducing apparatus, which detects a reproducing light on an opposite side of the disc during reproducing. However, the present invention may be applied to a so-called reflection-type recording and reproducing apparatus, which executes the irradiation of the recording light and the detection of the reproducing light on one side of the disc, too.

The recording and reproducing apparatus shown in FIG.1 includes the optical system which irradiates the signal light and the reference light generated by separating the laser light at the identical position on the recording medium from different directions. However, the present invention may be applied to a recording and reproducing apparatus which irradiates the signal light and the reference light on an identical axis, too.

As explained above, in the example and the modification , by spatial-modulating the Fourier image only in the direction different from the moving direction of the recording medium and executing the recording, the pattern of the reproducing light can be distinguished, even though the Fourier image is moved relatively to the recording medium. Therefore, since stopping the recording medium is unnecessary during recording and reproducing the information, the random access performance is improved. Also, by modulating the information in the moving direction of the recording medium by the mark length, recording capacity can be increased.

Though the hologram disc is used as the recording medium in the above embodiment, the application of the present invention is not limited to a disc-type recording medium. For example, the present invention can be applied to various shapes of the recording mediums, such as a card-type recording medium.

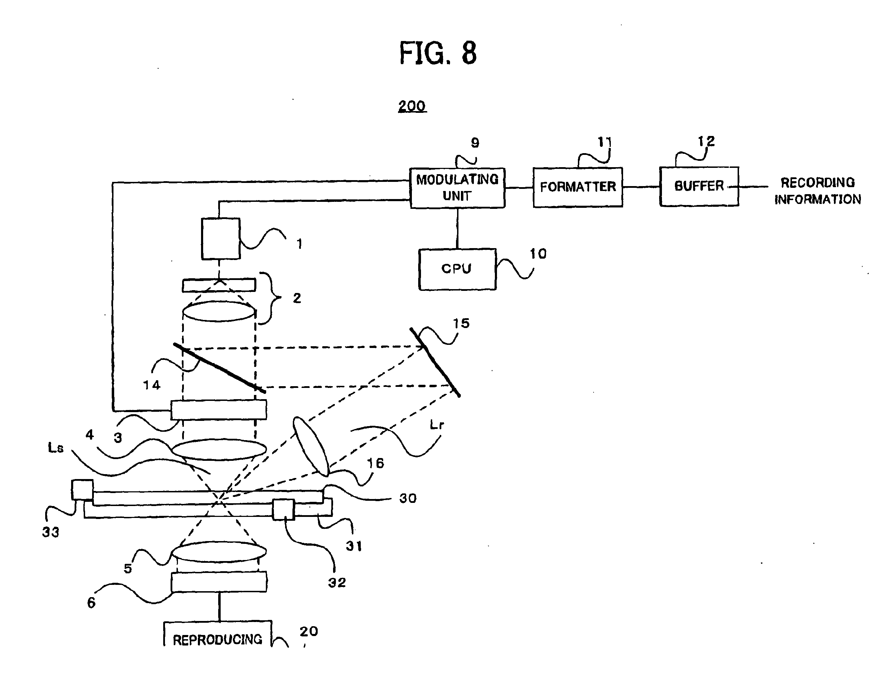

FIG. 8 schematically shows an example of the recording and reproducing to the card-type recording medium. In FIG. 8, a basic configuration of the recording and reproducing apparatus is identical to the configuration in the case of the disc-type recording medium shown in FIG. 1. However, the recording and reproducing apparatus in FIG. 8 is different from the recording and reproducing apparatus in FIG. 1, in that the recording and reproducing apparatus in FIG. 8 includes a card-type recording medium 30 and a mechanism for holding and moving it, instead of the mechanism for holding the disc 8 and rotating it.

Concretely, as shown in FIG. 8, the card-type recording medium 30 is disposed on a holder 31. The holder 31 includes an x-directionmotor 32 which moves the card-type recordingmedium 30 in an X-direction (a right and left direction in FIG. 8), and a Y-direction motor 33 which moves the card-type recording medium 30 in a Y-direction (a vertical direction to the page of FIG. 8). While the card-type recording medium 30 is moved in the X-direction or Y-direction by driving the X-direction motor 32 and the Y-direction motor 33, the information recording and reproducing is performed.

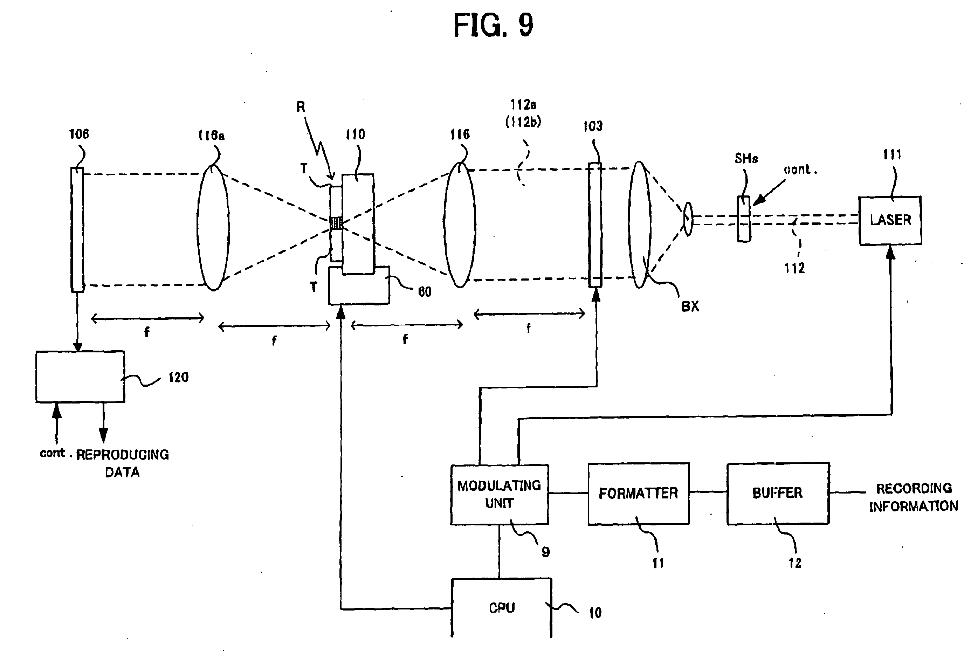

In the above embodiment, the signal light and the reference light are generated by dividing the optical light from the laser light source. However, the present invention can also be applied to the case in which the 0th-order light and a higher-order light interfere with each other, by utilizing the phenomenon that the 0th-order light having luminance component and the higher-order light having phase component are generated by making the laser light pass through the spatial modulating unit, without dividing the laser light. FIG. 9 shows a configuration example of a recording and reproducing apparatus inthatcase. In the example, by making the laser lightbe incident on the spatial modulating unit without dividing it, the interference fringes are generated by the interference between the 0th-order light and the higher-order lights of the incident light.

In FIG. 9, a shutter SHs, a beam expander BX, a one-dimensional spatial modulating unit 103, and a Fourier transforming lens 116 are disposed on a light path of an optical beam 112 from a laser light source 111. The laser light source 111, the beam expander BX, the one-dimensional spatial modulating unit 103 and the Fourier transforming lens 116 can be formed basically identically to each corresponding element in the embodiment shown in FIG. 1. The shutter SHs, which is controlled by a controller not shown, controls an irradiation time period of the light beam to the recording medium.

On the other hand, a recording medium 110 is held in a movable manner by a movable stage 60. The movable stage 60, which is controlled by the controller not shown, moves the recording medium 110 to a predetermined direction during the information recording and reproducing.

The beam expander BX enlarges the diameter of the light beam 112 having passed the shutter SHs to form a parallel beam, and makes the parallel beam be incident on the one-dimensional spatial modulating unit 103. Identically to the example in FIG. 1, the recording information is transmitted to the modulating unit 9 via the buffer 12 and formatter 11. The modulating unit 9, which is controlled by a CPU 10, modulates the laser light emitted from the laser light source 111 and the signal beam emitted from the one-dimensional spatialmodulatingunit 103. The signal beam 112a having passed the one-dimensional spatial modulating unit 103 is irradiated to the recording medium 110 by the Fourier transforming lens 116.

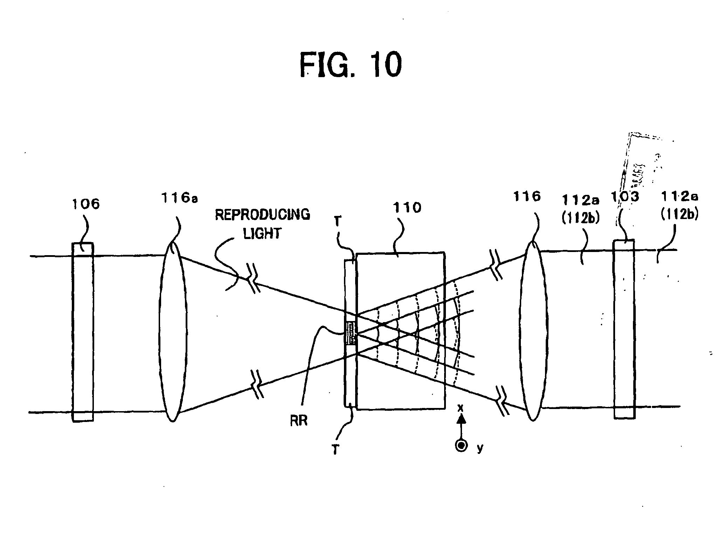

FIG. 10 shows a state of the light beam in the vicinity of the recording medium 110. On the recording medium 110, an incident light processing portion R is provided on a surface of a side opposite to an incident side of the signal light 112a. The incident light processing portion R has a function to separate the Oth-order light and the higher-order light of the incident light on the recording medium 110, and returns a portion of the light to the recording medium 110. Concretely, the incident light processing portion R includes a 0th-order light reflection portion RR which reflects only the 0th-order light of the signal light 112a to the inside of the recording medium 110, and a portion T which prescribes the range of the portion RR. The 0th-order light reflection portion RR reflects the 0th-order light of the signal light 112a to the inside of the recording medium 110. The interference fringes are formed by the 0th-order light reflected to the inside of the recording medium 110 by the 0th-order light reflection portion RR and the higher-order light, and is recorded inside the recording medium 110. According to the principle, it is unnecessary that the light beam from the laser light source is divided to form the reference light, like the example shown in FIG. 1.

During reproducing, as shown in FIG. 10, only the reference light 112b is irradiated. Similarly to the recording, the reference light 112b which has passed the recording medium 110 is vertically incident on the recording medium 110. If the reference light 112b passes the recording medium 110, the reproducing light which reproduces the recorded interference fringes is obtained on the opposite side of the recording medium 110 to which the reference light 112 is irradiated. The reproducing light is inverse-Fourier-transformed by an inverse Fourier transforming lens 116a and is guided to a light-receiving element 106 . An electric signal corresponding to the reproducing light is supplied from the light-receiving element 106 to a reproducing system 120, and reproducing data is outputted from the reproducing system 120.

The above embodiment is explained by ±1st-order lights. However, since +1st-order light and -1st-order light have an identical property, the identical effect can be obtained by only one of +1st-order light and -1st-order light.

## Claims

1. An information recording apparatus (100) comprising:
a laser light source (1);
a dividing unit (14) which divides a laser light emitted from the laser light source into two laser lights;
a one-dimensional spatial modulating unit (3) which applies one-dimensional spatial modulation to one of the two divided laser lights based on recording information;
a recording optical system (3, 4, 15, 16) which irradiates the spatial-modulated laser light to a recording medium (8) as a signal light (Ls) and irradiates the other one of the two divided laser lights to the recording medium as a reference light (Lr), thereby to record the recording information on the recording medium; and
a moving unit (7) which moves the recording medium with respect to the recording optical system such that an irradiation position of the signal light and the reference light relatively moves on the recording medium, wherein the recording optical system records the recording information while the moving unit is moving the recording medium,
**characterised in that** the one-dimensional spatial modulating unit (3) comprises a grating configuration (3a) wherein the one-dimensional spatial modulating unit is positioned such that an alignment direction of irradiation images produced by the grating configuration has a predetermined angle (α) with respect to a direction perpendicular to the moving direction (H) of the recording medium by the moving unit.

2. The information recording apparatus according to claim 1, wherein the recording medium is the disc (8), wherein the moving unit rotates the disc, and wherein the one-dimensional spatial modulating unit is positioned such that the alignment direction of the irradiation images produced by the grating configuration has a predetermined angle (α) with respect to the radial direction (V) of the disc.

3. The information recording apparatus according to claim 1 or claim 2, further comprising a light quantity control unit (10) which controls a light quantity of the laser light from the laser light source (1) based on the recording information.

4. The information recording apparatus (100) according to claim 3, wherein the recording optical system (3, 4, 15, 16) records the recording information as hologram marks created by the signal light and the reference light, and
wherein the light quantity control unit (10) controls the light quantity such that the recording information is modulated by length of the hologram marks in a direction (H) to which the irradiation direction moves on the recording medium (8).

5. An information reproducing apparatus (100) comprising:
a laser light source (1);
a reproducing unit (5, 6, 15, 16, 20) which irradiates a laser light emitted from the laser light source to a recording medium (8) as a reference light (Lr), and which reproduces recording information recorded on the recording medium based on the laser light transmitted through or reflected by the recording medium; and
a moving unit (7) which moves the recording medium with respect to a recording optical system (3, 4, 15, 16) such that an irradiation position of the reference light (Lr) relatively moves on the recording medium, wherein the reproducing unit reproduces the recording information while the moving unit is moving the recording medium,
wherein the recording optical system includes a one-dimensional spatial modulating unit (3) which applies one-dimensional spatial modulation to laser light emitted by the laser light source based on recording information,
**characterised in that** the one-dimensional spatial modulating unit (3) comprises a grating configuration (3a) wherein the one-dimensional spatial modulating unit is positioned such that an alignment direction of irradiation images produced by the grating configuration has a predetermined angle (α) with respect to a direction perpendicular to the moving direction (H) of the recording medium by the moving unit.

6. An information recording method comprising:
a dividing process which divides a laser light emitted from a laser light source (1) into two laser lights;
a modulating process which applies one-dimensional spatial modulation to one of the two divided laser lights based on recording information;
a recording process which irradiates the spatial-modulated laser light to a recording medium (8) as a signal light (La) and irradiates the other one of the two divided laser lights to the recording medium as a reference light (Lr), thereby to record the recording information on the recording medium; and
a moving process which moves the recording medium with respect to a recording optical system such that an irradiation position of the signal light and the reference light relatively moves on the recording medium, and wherein the recording process is executed while the recording medium is being moved by the moving process,
**characterised in that** the modulation process comprises positioning a one-dimensional spatial modulating unit (3) which includes a grating configuration (3a) such that an alignment direction of irradiation images produced by the grating configuration has a predetermined angle (α) with respect to a direction perpendicular to the moving direction (H) of the recording medium by the moving process.

7. An information recording medium (8) on which the recording information is recorded by the information recording apparatus according to any one of claims 1 to 3.

## Patentansprüche

1. lnformationsaufzeichnungsvorrichtung (100), umfassend:
eine Laserlichtquelle (1),
eine Teilungseinheit (14), die ein von der Laserlichtquelle emittierte Licht in zwei Laserlichter teilt,
eine eindimensionale räumliche Modulationseinheit (3), die auf Basis von Aufzeichnungsinformation eindimensionale räumliche Modulation auf eines von den zwei geteilten Laserlichtern anwendet,
ein optisches Aufzeichnungssystem (3, 4, 15, 16), das das räumlich modulierte Laserlicht als ein Signallicht (Ls) zu einem Aufzeichnungsmedium (8) strahlt und das andere der zwei geteilten Laserlichter als ein Referenzlicht (Lr) zu dem Aufzeichnungsmedium strahlt, und
eine Bewegungseinheit (7), die das Aufzeichnungsmedium in Bezug auf das optischen Aufzeichnungssystem so bewegt, dass sich eine Bestrahlungsposition des Signallichts und des Referenzlichts relativ auf dem Aufzeichnungsmedium bewegt,
wobei das optische Aufzeichnungssystem die Aufzeichnungsinformation aufzeichnet, während die Bewegungseinheit das Aufzeichnungsmedium bewegt,
**dadurch gekennzeichnet, dass** die eindimensionale räumliche Modulationseinheit (3) eine Gitterkonfiguration (3a) umfasst, wobei die eindimensionale räumliche Modulationseinheit so positioniert ist, dass eine Ausrichtungsrichtung von Strahlungsbildern, die durch die Gitterkonfiguration erzeugt werden, einen vorgegebenen Winkel (α) in Bezug auf eine Richtung senkrecht zu der Bewegungsrichtung (H) des Aufzeichnungsmediums durch die Bewegungseinheit hat.

2. Informationsaufzeichnungsvorrichtung nach Anspruch 1, wobei das Aufzeichnungsmedium die Platte (8) ist, wobei die Bewegungseinheit die Platte dreht und wobei die eindimensionale räumliche Modulationseinheit so positioniert ist, dass die Ausrichtungsrichtung der durch die Gitterkonfiguration erzeugten Strahlungsbilder einen vorgegebenen Winkel (α) in Bezug auf die radiale Richtung (V) der Platte hat.

3. Informationsaufzeichnungsvorrichtung nach Anspruch 1 oder 2, die des Weiteren eine Lichtmengen-Regeleinheit (10) umfasst, die auf Basis der Aufzeichnungsinformation eine Lichtmenge des Laserlichts aus der Laserlichtquelle (1) regelt.

4. Informationsaufzeichnungsvorrichtung (100) nach Anspruch 3, wobei das optische Aufzeichnungssystem (3, 4, 15,16) die Aufzeichnungsinformation als durch das Signallicht und das Referenzlicht erzeugte Hologrammmarkierungen aufzeichnet und
wobei die Lichtmengen-Regeleinheit (10) die Lichtmenge so regelt, dass die Aufzeichnungsinformation um die Länge der Hologrammmarkierungen in eine Richtung (H), zu der sich die Strahlungsrichtung auf dem Aufzeichnungsmedium (8) bewegt, moduliert wird.

5. Informationswiedergabevorrichtung (100), umfassend:
eine Laserlichtquelle (1),
eine Wiedergabeeinheit (5, 6, 15, 16, 20), die ein von der Laserlichtquelle emittiertes Laserlicht als ein Referenzlicht (Lr) zu einem Aufzeichnungsmedium (8) strahlt und die auf Basis des durch das Aufzeichnungsmedium gesendeten oder des von diesem reflektierten Laserlichts auf dem Aufzeichnungsmedium aufgezeichnete Aufzeichnungsinformation wiedergibt,
eine Bewegungseinheit (7), die das Aufzeichnungsmedium in Bezug auf ein optisches Aufzeichnungssystem (3, 4, 15, 16) so bewegt, dass sich eine Bestrahlungsposition des Referenzlichts (Lr) relativ auf dem Aufzeichnungsmedium bewegt, wobei die Wiedergabeeinheit die Aufzeichnungsinformation wiedergibt, während die Bewegungseinheit das Aufzeichnungsmedium bewegt und
wobei das optische Aufzeichnungssystem eine eindimensional räumliche Modulationseinheit (3) enthält, die auf Basis von Aufzeichnungsinformation eine eindimensionale räumliche Modulation auf das von der Laserlichtquelle emittierte Laserlicht anwendet,
**dadurch gekennzeichnet, dass** die eindimensionale räumliche Modulationseinheit (3) eine Gitterkonfiguration (3a) umfasst, wobei die eindimensionale räumliche Modulationseinheit so positioniert ist, dass eine Ausrichtungsrichtung von Strahlungsbildern, die durch die Gitterkonfiguration erzeugt werden, einen vorgegebenen Winkel (α) in Bezug auf eine Richtung senkrecht zu der Bewegungsrichtung (H) des Aufzeichnungsmediums durch die Bewegungseinheit hat.

6. Informationsaufzeichnungsverfahren, umfassend:
einen Teilungsvorgang, der ein von einer Laserlichtquelle (1) emittiertes Licht in zwei Laserlichter teilt,
einen Modulationsvorgang, der auf Basis von Aufzeichnungsinformation eine eindimensionale räumliche Modulation auf eines der zwei geteilten Laserlichter anwendet,
einen Aufzeichnungsvorgang, der das räumlich modulierte Laserlicht als ein Signallicht (La) zu einem Aufzeichnungsmedium (8) strahlt und das andere der zwei geteilten Laserlichter als ein Referenzlicht (Lr) zu dem Aufzeichnungsmedium strahlt, wodurch die Aufzeichnungsinformation auf dem Aufzeichnungsmedium aufgezeichnet wird, und
einen Bewegungsvorgang, der das Aufzeichnungsmedium in Bezug auf ein optisches Aufzeichnungssystem so bewegt, dass sich eine Bestrahlungsposition des Signallichts und des Referenzlichts relativ auf dem Aufzeichnungsmedium bewegt,
wobei der Aufzeichnungsvorgang ausgeführt wird, während das Aufzeichnungsmedium durch den Bewegungsvorgang bewegt wird,
und **dadurch gekennzeichnet, dass** der Modulationsvorgang das Positionieren einer eindimensionalen räumlichen Modulationseinheit (3), die eine Gitterkonfiguration (3a) enthält, so umfasst, dass eine Ausrichtungsrichtung der Strahlungsbilder, die durch die Gitterkonfiguration erzeugt werden, einen vorgegebenen Winkel (α) in Bezug auf eine Richtung senkrecht zu der Bewegungsrichtung (H) des Aufzeichnungsmediums durch den Bewegungsvorgang hat.

## Revendications

1. Appareil d'enregistrement d'informations (100) comprenant :
une source de lumière laser (1) ;
une unité de division (14) qui divise une lumière laser émise par la source de lumière laser en deux lumières laser ;
une unité de modulation spatiale unidimensionnelle (3) qui applique une modulation spatiale unidimensionnelle à l'une des deux lumières laser divisées sur la base des informations d'enregistrement ;
un système optique d'enregistrement (3, 4, 15, 16) qui irradie la lumière laser spatiale modulée vers un support d'enregistrement (8) en tant que lumière de signal (Ls), et qui irradie l'autre des deux lumières laser divisées vers le support d'enregistrement en tant que lumière de référence (Lr), de façon à enregistrer les informations d'enregistrement sur le support d'enregistrement ; et
une unité de déplacement (7) qui déplace le support d'enregistrement par rapport au système optique d'enregistrement afin qu'une position d'irradiation de la lumière de signal et de la lumière de référence se déplace relativement sur le support d'enregistrement, dans laquelle le système optique d'enregistrement enregistre les informations d'enregistrement pendant que l'unité de déplacement déplace le support d'enregistrement,
**caractérisé en ce que** l'unité de modulation spatiale unidimensionnelle (3) comprend une configuration de réseau (3a) dans laquelle l'unité de modulation spatiale unidimensionnelle est positionnée afin qu'une direction d'alignement d'images d'irradiation produites par la configuration de réseau possède un angle prédéterminé (α) par rapport à une direction perpendiculaire à la direction de déplacement (H) du support d'enregistrement par l'unité de déplacement.

2. Appareil d'enregistrement d'informations selon la revendication 1, dans lequel le support d'enregistrement est le disque (8), dans lequel l'unité de déplacement fait tourner le disque, et dans lequel l'unité de modulation spatiale unidimensionnelle est positionnée afin que la direction d'alignement des images d'irradiation produites par la configuration de réseau possède un angle prédéterminé (α) par rapport à la direction radiale (V) du disque.

3. Appareil d'enregistrement d'informations selon la revendication 1 ou la revendication 2, comprenant en outre une unité de commande de quantité de lumière (10) qui contrôle une quantité de lumière de la lumière laser provenant de la source de lumière laser (1) sur la base des informations d'enregistrement.

4. Appareil d'enregistrement d'informations (100) selon la revendication 3, dans lequel le système optique d'enregistrement (3, 4, 15, 16) enregistre les informations d'enregistrement comme des marques d'hologrammes créées par la lumière de signal et la lumière de référence, et
dans lequel l'unité de commande de quantité de lumière (10) contrôle la quantité de lumière afin que les informations d'enregistrement soient modulées par la longueur des marques d'hologrammes dans une direction (H) vers laquelle la direction d'irradiation se déplace sur le support d'enregistrement (8).

5. Appareil d'enregistrement d'informations (100) comprenant :
une source de lumière laser (1) ;
une unité de reproduction (5, 6, 15, 16, 20) qui irradie une lumière laser émise par la source de lumière laser vers un support d'enregistrement (8) en tant que lumière de référence (Lr), et qui reproduit les informations d'enregistrement enregistrées sur le support d'enregistrement sur la base de la lumière laser transmise à travers ou réfléchie par le support d'enregistrement ;
et
une unité de déplacement (7) qui déplace le support d'enregistrement par rapport à un système optique d'enregistrement (3, 4, 15, 16) afin qu'une position d'irradiation de la lumière de référence (Lr) se déplace relativement sur le support d'enregistrement, dans laquelle l'unité de reproduction reproduit les informations d'enregistrement pendant que l'unité de déplacement déplace le support d'enregistrement,
dans lequel le système optique d'enregistrement comprend une unité de modulation spatiale unidimensionnelle (3) qui applique une modulation spatiale unidimensionnelle à la lumière laser émise par la source de lumière laser sur la base des informations d'enregistrement,
**caractérisé en ce que** l'unité de modulation spatiale unidimensionnelle (3) comprend une configuration de réseau (3a) dans laquelle l'unité de modulation spatiale unidimensionnelle est positionnée afin qu'une direction d'alignement d'images d'irradiation produites par la configuration de réseau possède un angle prédéterminé (α) par rapport à une direction perpendiculaire à la direction de déplacement (H) du support d'enregistrement par l'unité de déplacement.

6. Procédé d'enregistrement d'informations comprenant :
un processus de division qui divise une lumière laser émise par une source de lumière laser (1) en deux lumières laser ;
un processus de modulation qui applique une modulation spatiale unidimensionnelle à l'une des deux lumières laser divisées sur la base des informations d'enregistrement ;
un processus d'enregistrement qui irradie la lumière laser spatiale modulée vers un support d'enregistrement (8) en tant que lumière de signal (La) et qui irradie l'autre des deux lumières laser divisées vers le support d'enregistrement en tant que lumière de référence (Lr), afin d'enregistrer ainsi les informations d'enregistrement sur le support d'enregistrement ; et
un processus de déplacement qui déplace le support d'enregistrement par rapport à un système optique d'enregistrement afin qu'une position d'irradiation de la lumière de signal et de la lumière de référence se déplace relativement sur le support d'enregistrement, et dans lequel le processus d'enregistrement est exécuté pendant que le support d'enregistrement est déplacé par le processus de déplacement,
**caractérisé en ce que** le processus de modulation comprend le positionnement d'une unité de modulation spatiale unidimensionnelle (3) qui comprend une configuration de réseau (3a) afin qu'une direction d'alignement d'images d'irradiation produites par la configuration de réseau possède un angle prédéterminé (α) par rapport à une direction perpendiculaire à la direction de déplacement (H) du support d'enregistrement par le processus de déplacement.

7. Support d'enregistrement d'informations (8) sur lequel les informations d'enregistrement sont enregistrées par l'appareil d'enregistrement d'informations selon l'une quelconque des revendications 1 à 3.
